(19) Europäisches Patentamt
European Patent Office
Office européen des brevets

(11) EP 4 210 128 A1

(12) EUROPEAN PATENT APPLICATION
published in accordance with Art. 153(4) EPC

(43) Date of publication:
**12.07.2023 Bulletin 2023/28**

(21) Application number: **21864597.6**

(22) Date of filing: **26.08.2021**

(51) International Patent Classification (IPC):
***H01M 4/13*** (2010.01) ***H01M 4/133*** (2010.01)
***H01M 50/46*** (2021.01) ***H01M 50/446*** (2021.01)
***H01M 10/058*** (2010.01) ***H01M 10/0525*** (2010.01)
***H01M 4/02*** (2006.01)

(52) Cooperative Patent Classification (CPC):
**H01M 4/02; H01M 4/13; H01M 4/133; H01M 10/0525; H01M 10/058; H01M 50/446; H01M 50/46;** Y02E 60/10; Y02P 70/50

(86) International application number:
**PCT/KR2021/011477**

(87) International publication number:
**WO 2022/050637 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 KR 20200113237**

(71) Applicant: **Samsung SDI Co., Ltd.**
**Yongin-si, Gyeonggi-do 17084 (KR)**

(72) Inventors:
- **YANG, Mihwa**
**Yongin-si, Gyeonggi-do 17084 (KR)**
- **NAM, Junghyun**
**Yongin-si, Gyeonggi-do 17084 (KR)**
- **SONG, Hyo-jung**
**Yongin-si, Gyeonggi-do 17084 (KR)**
- **YOON, Hyejin**
**Yongin-si, Gyeonggi-do 17084 (KR)**
- **LEE, Jinhee**
**Yongin-si, Gyeonggi-do 17084 (KR)**

(74) Representative: **Michalski Hüttermann & Partner Patentanwälte mbB**
**Kaistraße 16A**
**40221 Düsseldorf (DE)**

# (54) ELECTRODE ASSEMBLY FOR LITHIUM SECONDARY BATTERY, AND LITHIUM SECONDARY BATTERY INCLUDING SAME

(57) The present invention relates to an electrode assembly for a lithium secondary battery and a lithium secondary battery including the same, the electrode assembly comprising: a current collector, a negative electrode comprising a negative electrode active material layer located on the current collector and an organic-inorganic composite layer integrated with the negative electrode active material layer, and a positive electrode, wherein the organic-inorganic composite layer comprises an organic layer and an inorganic layer.

FIG. 1

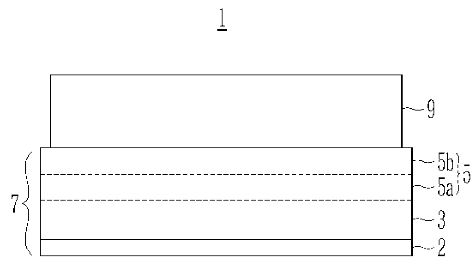




Processed by Luminess, 75001 PARIS (FR)

## Description

### TECHNICAL FIELD

It relates to an electrode assembly for a lithium secondary battery and a lithium secondary battery including the same.

### BACKGROUND ART

Recently, the rapid supplement of electronic devices such as mobile phones, laptop computers, and electric vehicles using batteries require surprising increases in demand for secondary batteries with relatively high capacity and lighter weight. Particularly, a lithium secondary battery has recently drawn attention as a driving power source for portable devices, as it a has lighter weight and high energy density. Accordingly, researches for improving performances of lithium secondary battery are actively studied.

A lithium secondary battery includes a positive electrode and a negative electrode which may include an active material being capable of intercalating and deintercalating lithium ions, and an electrolyte, and generates electrical energy due to an oxidation and reduction reaction when lithium ions are intercalated and deintercalated into the positive electrode and the negative electrode.

As for a positive electrode active material of a lithium secondary battery, transition metal compounds such as lithium cobalt oxides, lithium nickel oxides, and lithium manganese oxides are mainly used. As the negative electrode active material, a crystalline carbonaceous material such as natural graphite or artificial graphite, or an amorphous carbonaceous material, is used.

### TECHNICAL PROBLEM

One embodiment provides an electrode assembly for a lithium secondary battery exhibiting excellent rate-capability and the cycle-life characteristics.

Another embodiment provides a lithium secondary battery including the electrode assembly.

### TECHNICAL SOLUTION

One embodiment provides an electrode assembly for a lithium secondary battery consisting of a negative electrode including a current collector; a negative electrode active material layer positioned on the current collector and including a negative electrode active material; and an organic-inorganic composite layer integrated with the negative electrode active material layer; and a positive electrode, wherein the organic-inorganic composite layer includes an organic layer and an inorganic layer.

The organic layer may be positioned to contact the negative electrode active material layer. Alternatively, the inorganic layer may be positioned to contact the negative electrode active material layer.

The organic layer may include polyethylene, polypropylene, polyester, polyamide, polyimide, polyamideimide, polyetherimide, polyacrylonitrile, polyvinylidene fluoride, polyvinylchloride, polyvinylidene chloride, a polyethylene glycol derivative, a polyoxide, polyvinyl acetate, polystyrene, polyvinylpyrrolidone, a copolymer thereof, or a combination thereof.

The inorganic layer may include an inorganic material selected from alumina ($Al_2O_3$), boehmite (aluminum oxide hydroxide), zirconia, titanium oxide ($TiO_2$), silica ($SiO_2$), or a combination thereof. The organic layer may be prepared by electrospinning.

The organic layer may be prepared by electrospinning.

The inorganic layer may be prepared by electrospraying.

The organic layer may be a woven-type. The organic layer may have a thickness of 1 μm to 20 μm.

The inorganic layer may have a thickness of 1 μm to 25 μm.

According to another embodiment, a lithium secondary battery including the electrode assembly and an electrolyte, is provided.

### ADVANTAGEOUS EFFECTS

An electrode assembly for a lithium secondary battery may exhibit rate-capability and the cycle-life characteristics.

## BRIEF DESCRIPTION OF THE DRAWINGS

FIG. 1 is a drawing showing an electrode assembly for a lithium secondary battery according to one embodiment.
FIG. 2 is a schematic view showing the structure of a lithium secondary battery according to an embodiment.
FIG. 3 is a SEM photograph of a cross-section of the electrode according to Example 1.

## BEST MODE FOR PERFORMING INVENTION

Hereinafter, embodiments are described in detail. However, these embodiments are exemplary, the present invention is not limited thereto, and the present invention is defined by the scope of claims.

An electrode assembly for a lithium secondary battery consists of a negative electrode and a positive electrode, and the negative electrode includes a current collector, a negative electrode active material layer positioned on the current collector, and an organic-inorganic composite layer integrated with the negative electrode active material layer.

The organic-inorganic composite layer is located between the positive electrode and the negative electrode to act as a separator preventing short circuits, so that the electrode assembly for a lithium secondary battery does not include any additional separator.

As the electrode assembly for the lithium secondary battery according to one embodiment does not include an additional separator, a lamination process for combining a separator and an electrode may not be necessary, and thus, the battery may be economically fabricated.

Furthermore, integration of the organic-inorganic composite layer with the negative electrode active material layer does not indicate that the organic-inorganic composite layer is separately formed from the negative electrode active material layer. It relates to a state in which the negative electrode active material and the organic-inorganic composite layer are more firmly bonded, as the negative electrode active material layer is partially immersed and dried by directly forming the organic-inorganic layer on the negative electrode active material layer. As such, the integration of the organic-inorganic composite layer with the negative electrode active material layer may be clearly shown from the negative electrode active material being distinguished from the organic-inorganic composite layer, but the interface (boundary part) has unevenness (unflat), when the electrode assembly is measured by SEM or the like.

As such, as the organic-inorganic composite layer is integrated with the negative electrode active material layer, it may be presented in a more firmly combined form with the negative electrode active material layer. Furthermore, a polypropylene film which is used as a separator may cause size changes due to heat shrinkage as the repeated charge and discharge proceeds, thereby insufficiently separating the positive electrode and the negative electrode to cause shortcomings such as a short circuit, but the electrode assembly according to one embodiment does not cause the shortcomings such as heat-shrinkage, as the organic-inorganic composite layer which acts as a separator is integrated with the negative electrode active material layer.

In addition, as the organic-inorganic composite layer is integrated with the negative electrode active material layer, heat resistance and insulation may be improved, and resistance may be reduced. If an organic-inorganic composite layer and a negative electrode active material layer are separately formed and then they are combined, without forming the organic-inorganic composite layer integrated with the negative electrode active material layer, resistance to transfer of lithium ions may be increased and an additional process for subsequently integrating may also be required.

Furthermore, the organic-inorganic composite layer according to one embodiment may be a two-layer structure including an organic layer and an inorganic layer. Herein, the order of the organic layer and the inorganic layer may be that the organic layer may be positioned to contact the negative electrode active material, or alternatively, the inorganic layer may be positioned to contact the negative electrode active material layer.

Such an electrode assembly 10, as shown in FIG. 1, may include a negative electrode 7 and a positive electrode 9, and the negative electrode 7 may include a current collector 2, a negative electrode active material layer 4, and an organic-inorganic composite layer 5. The organic-inorganic composite layer 5 may include a first layer 5a and a second layer 5b, and when the first layer 5a is an organic layer, the second layer 5b is an inorganic layer, and alternatively, when the first layer 5a is an inorganic layer, the second layer 5b is an organic layer.

FIG. 1 shows that the negative electrode active material layer 4 and organic-inorganic composite layer 5 are separated layers, but it merely distinguishingly shows the negative electrode active material layer and the organic-inorganic composite layer. In FIG. 3, dotted lines indicate that the negative electrode active material layer and the organic-inorganic composite layer are integrated. Furthermore, as the first layer and the second layer are permeated with each other to form a composite layer, this is also indicated by a dotted line.

As the negative electrode active material layer is integrated with the organic-inorganic composite layer in the electrode assembly according to one embodiment, the size of the negative electrode active material may be substantially identical to the organic-inorganic composite layer in a width direction.

The organic layer may include a heat resistant polymer, and the heat resistant polymer may have a high heat resistant engineering resin. The heat resistant polymer may be polyethylene (PE), polypropylene (PP), polyester, polyamide, polyimide (PI), polyamide imide (PAI), polyether imide, polyacrylonitrile (PAN), polyvinylidene fluoride (PVDF), polyvinylidene fluoride-hexafluoropropylene (PVDF-HFP), polycarbonate (PC), polyvinyl chloride (PVC), polyvinylidene chloride, a polyethylene glycol derivative, polyoxide, polyvinyl acetate, polystyrene (PS), polyvinylpyrrolidone (PVP), a copolymer thereof, or a combination thereof. The heat resistant polymer may be a non-aqueous polymer. If an aqueous polymer is used, it is not desirable as it is difficult to form fiber by electrospinning.

The inorganic layer may include an inorganic material selected from alumina ($Al_2O_3$), boehmite (aluminum oxide hydroxide), zirconia, titanium oxide ($TiO_2$), silica ($SiO_2$), or a combination thereof.

In one embodiment, the thickness of the organic layer may be 1 $\mu$m to 20 $\mu$m or 8 $\mu$m to 10 $\mu$m. In the specification, the thickness of the organic layer refers to a region in which organic material is presented in the organic-inorganic composite layer integrated with the negative electrode active material layer, and does not refer to a thickness of a region in which the organic material is separately presented. When the thickness of the organic layer satisfies the above range of thickness, a suitable high density may be obtained, and thus, generation of Li dendrites during charge and discharge may be effectively prevented.

As such, it has the organic layer and the inorganic layer, and thus, a heat resistance effect and flexibility owing to inclusion of a polymer, particularly a heat resistant polymer, may be imparted to a negative electrode. Accordingly, damage to the negative electrode may be suppressed during the battery fabrication, the generation of lithium dendrites may be effectively suppressed during charge and discharge, and the increases in heat resistance and mechanical strength owing an inclusion of an inorganic material may be obtained. Such effects are difficult to obtain from one layer which is prepared by mixing the polymer and the inorganic material.

In case of only including an organic layer, particularly, an organic layer having a woven state, for example, a network structure, rather the organic-inorganic composite layer, the positive electrode may directly contact the negative electrode during the charge and discharge or Li dendrites may be generated, to cause a short circuit, and thus it may be impossible to use a battery. In case of only including an organic layer, even though the organic layer is formed with a 2-layer structure, similar problems to the above may be caused.

Alternatively, in case of including only an inorganic layer without an inorganic layer, the flexibility of the negative electrode is not satisfied, and thus particles of the inorganic layer may be separated in assembling of the battery, thereby generating Li dendrites. Furthermore, the generation of Li dendrites causes a short circuit to occur.

A thickness of the inorganic layer may be 1 $\mu$m to 25 $\mu$m, or 10 $\mu$m to 14 $\mu$m. In the specification, the thickness of the inorganic layer refers to a region in which inorganic material is presented in the organic-inorganic composite layer integrated with the negative electrode active material layer, and does not refer to a thickness of a region in which the inorganic material is separately presented. When the thickness of the inorganic layer is within the range, a density of the inorganic layer may be suitably improved to slightly suppress generation of Li dendrites.

Such an organic layer may have a woven state, for example, a network structure, and the organic layer with the network structure may be prepared by e.g., electrospinning. However, the organic layer preparation is not limited to the electrospinning, and may be any general procedures, as long as an organic layer may be prepared. As such, when the organic layer has the woven state, for example, the network structure, it has a merit that it may minimize resistance for transferring Li ions. The organic layer has the woven state which indicates a porous layer in which pores are formed, and if the organic layer is prepared as a dense layer, a distance for transferring Li ions is increased to relatively increase Li ion transferring resistance, and it may be separated from the active material layer and it is not integrated with the active material layer.

The inorganic layer may be presented as a dense layer, and such an inorganic layer may be prepared by, e.g., electrospraying. However, the inorganic layer preparation is not limited to the electrospraying, and may be any procedures such as doctor blade coating and the like, as long as the inorganic layer may be prepared as a dense layer. When the inorganic layer is presented as the dense layer, the generation of Li dendrites may be effectively suppressed. If the inorganic layer is presented as a porous layer, the short circuit may occur during charge and discharge.

In case of firstly preparing the organic layer, the organic layer is prepared by electrospinning to have a woven state, and thus the formation of the inorganic layer on the organic layer by electrospraying renders to immerse the composition for preparing the inorganic layer into the inside of the organic layer, so that the organic-inorganic layer may be all integrated with the negative electrode active material layer. Furthermore, in case of firstly preparing the inorganic layer, the composition for preparing the organic layer may be partly immersed into the inorganic layer to form an organic-inorganic layer, thereby integrating it with the negative electrode active material layer.

In one embodiment, the negative electrode active material included in the negative electrode active material layer may be a carbon-based active material, a silicon-based active material, or combinations thereof.

The carbon-based active material may be crystalline carbon, amorphous carbon, or a mixture thereof. In one embodiment, the carbon-based active material may be a crystalline carbon negative electrode active material. The crystalline carbon may be graphite such as unspecified shape, sheet, flake), or spherical or fiber shaped natural graphite

or artificial graphite, and the amorphous carbon may be soft carbon, hard carbon, mesophase pitch carbide, sintered cokes, and the like.

The Si-based negative electrode active material may be Si, a Si-C composite, $SiO_x$ ($0 < x < 2$), and an Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si), and the Sn-based negative electrode active material is selected from Sn, $SnO_2$, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, but not Si), and the like, and also, a mixture of at least one thereof with $SiO_2$. The elements Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The negative electrode active material layer may include the negative electrode active material, and optionally, may further include a binder and a conductive material.

The amount of the negative electrode active material may be 95 wt% to 99 wt% based on the total weight of the negative electrode active material layer.

The amount of the binder may be 1 wt% to 5 wt% based on the total weight of the negative electrode active material layer. When the conductive material is further included, 90 wt% to 98 wt% of the negative electrode active material, 1 wt% to 5 wt% of the binder, and 1 wt% to 5 wt% of the conductive material may be included.

The binder improves binding properties of negative electrode active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinylfluoride, polyurethane, polytetrafluoro ethylene, polyvinylidene fluoride, polyethylene, polypropylene, polyamide imide, polyimide, or a combination thereof.

The aqueous binder may be a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrine, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of 0.1 parts by weight to 3 parts by weight based on 100 parts by weight of the negative electrode active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The electrode assembly may be prepared by the following procedure.

A negative electrode active material layer is formed on a current collector. The negative electrode active material layer may be prepared by a general technique including mixing a negative electrode active material, a binder, and optionally a conductive material in a solvent to prepare a negative electrode active material composition of a slurry type, coating it on a current collector, and drying it.

Thereafter, an organic-inorganic composite layer including an organic layer and an inorganic layer is formed on the negative electrode active material layer to prepare a negative electrode in which the negative electrode active material layer is integrated with the organic-inorganic composite layer.

Regardless of order of preparing the organic layer or the inorganic layer, the organic layer may be formed by electrospinning a composition for preparing an organic layer on a substrate. The composition for preparing the organic layer may include a polymer and a solvent.

The electrospinning may be performed by positioning one nozzle pack including a tip in which a hole size may be 23 G (gauge) to 30 G, and a collector roller at a predetermined gap, adding the composition for preparing the organic layer to the tip, positioning the substrate on the collector roller, and applying a voltage of 35 kV to 50 kV to the tip. The number of tips may be suitably controlled according to the amount, types, etc., of the polymer included in the composition for preparing the organic layer, and for example, may bet 20 tips to 60 tips.

The predetermined gap between the nozzle pack and the substrate may be 10 cm to 20 cm.

If the hole size of the tip is 25 G to 30 G, it is desirable because the organic layer of the desired type may be obtained.

According to the electrospinning, the polymer solution is sprayed and stretched in the form of fibers to be spun on the substrate in a form of a cone, thereby obtaining an organic layer. The theory for the organic layer preparation is that the composition for preparing the organic layer hangs at the tip end in the form of drops due to surface tension, and applying of a voltage generates a repulsive force of the electric charges to start distortion thereof in the opposite direction to the surface tension, and when a critical voltage is reached, the polymer solution is sprayed from the end point of the droplet and the collector roller collects a spraying material called a Taylor cone to prepare an organic layer.

Herein, the electrospinning may be performed under a condition of 20 °C to 30 °C and relative humidity of 40 % to 60 %. When the electrospinning is performed under a condition of the temperature and the relative humidity, the spinning may be performed while the thickness of fibers may be uniformly maintained.

Furthermore, the roll speed of the collector roller may be adjusted in order to prepare an organic layer with the suitable thickness, and for example, may be 1 m/min to 3 m/min. In addition, the speed may be controlled in order to emit a solid content at a speed of 20 μl/min to 200 μl/min in the composition for preparing the organic layer discharged from the tip.

Furthermore, tip air may be suitably controlled by minimizing interference between tips to produce uniform electrospinning. The control for the tip air may be adjusted by flowing compressed air with a pressure of 0.1 MPa to 0.2 MPa.

After the electrospinning is performed, drying may be performed using hot air of 70 °C to 110 °C.

In the composition for preparing the organic layer, the polymer may be one or a mixture of at least one selected from the above polymers, and the solvent may be dimethyl acetate, dimethylformamide, acetone, or a combination thereof.

As the polymer may be the heat resistant polymer and the heat resistant polymer is non-aqueous, the solvent may be the organic solvent. A use of an aqueous polymer requires use of a water solvent which causes difficulty in electrospinning and damage to the electrode, that is, causes spring back, but the embodiment uses organic solvents and thus the shortcomings caused from the use of a water solvent may not occur.

In the composition for preparing the organic layer, the amount of the polymer may be 5 wt% to 20 wt% based on the total weight, 100 wt%, of the composition. When the amount of the polymer is within the range, the organic layer with a suitable thickness may be prepared. If the amount of the polymer is less than 5 wt%, it is difficult to form fiber during the electrospinning. Whereas a larger amount than 20 wt% causes the tip to block during the electrospinning and thus the spinning is impossible, or the thickness of the fibers is non-uniform and thicker than desired.

The organic layer is formed by electrospinning, and thus the resulting organic layer may have a woven state, for example, a network structure. If the organic layer is prepared by directly coating the composition on the substrate or dipping the substrate in the composition rather than electrospinning, the organic layer may be densely prepared. In addition, the thickness of the electrode may be extremely increased due to the solvent remaining in the electrode to not suitably improve energy density per volume of the battery. Furthermore, the dense organic layer, itself, acts as a resistance layer to increase Li ion transportation resistance, and thus the battery performances may be deteriorated. According to one embodiment, if the organic layer is prepared by electrospinning, the solvent may be well volatilized, and the spring back phenomenon in which the solvent damages the negative electrode may be effectively suppressed.

The inorganic layer may be prepared by electrospraying a composition for preparing the inorganic layer on a substrate. The composition for preparing the inorganic layer may include an inorganic material, a binder, and a solvent.

The electrospraying may be performed by positioning one nozzle pack including a tip in which a hole size may be 23 G to 30 G, and a collector roller at a predetermined gap, adding the composition for preparing the inorganic layer to the tip, positioning the substrate on the collector roller, and applying a voltage of 35 kV to 50 kV to the tip.

The number of tips may be suitably controlled according to the amount, types, etc., of a polymer included in the composition for preparing the inorganic layer, and for example, may be 20 tips to 60 tips.

The predetermined gap between the nozzle pack and the substrate may be 10 cm to 20 cm.

If the hole size of the tip is 25 G to 30 G, it is desirable in that the inorganic layer of the desired type may be obtained.

According to the electrospraying, the composition for preparing the inorganic layer is sprayed as a dot type on the substrate to prepare an inorganic layer. If the inorganic layer is prepared by directly coating the composition on the substrate or dipping the substrate into the composition rather than electrospraying, the thickness of the electrode may be extremely increased due to the solvent remaining in the electrode to not suitably improve energy density per volume of the battery. Furthermore, the inorganic layer is performed by the electrospinning so that the solvent may be well volatilized, thereby preventing the spring back phenomenon and causing damage of the solvent to the negative electrode.

Furthermore, the roll speed of the collector roller may be adjusted in order to prepare an organic layer with the suitable thickness, and for example, may be 0.5 m/min to 3 m/min. In addition, the speed may be controlled in order to emit a solid content at a speed of 20 μl/min to 100 μl/min in the composition for preparing the inorganic layer discharged from the tip.

Furthermore, a tip air may be suitably controlled by minimizing the interference between tips to allow uniform electrospraying. The control for the tip air may be adjusted by flowing compressed air with a pressure of 0.1 MPa to 0.2 MP.

After the electrospinning is performed, drying may be performed using hot air of 90 °C to 110 °C.

In the composition for preparing the inorganic layer, the inorganic material may be the same as the above polymers and the solvent may be dimethyl acetate, N-methylpyrrolidone, dimethylformamide, acetone, or a combination thereof. The binder may be polyvinylidene fluoride, polyamide imide, polyvinylpyrrolidone, polyacrylonitrile, a copolymer thereof, or a combination thereof. An amount of the inorganic material in the composition for preparing the inorganic layer may be 85 wt% to 96 wt% based on the total weight, 100 wt%, of the composition.

After the organic-inorganic composite layer is prepared, roll pressing may be further performed. The roll pressing may be performed at 25 °C to 110 °C. When the roll pressing is further performed, the organic-inorganic composite layer is compressed to shorten a path for transferring Li ions, thereby obtaining advantages related to transferring lithium ions during charge and discharge.

As the composition for preparing the organic layer is prepared by electrospinning, the composition for preparing the organic layer is immersed into pores which may be naturally formed in the negative electrode active material layer and integrated, and also, the electrospinning allows preparation of the organic layer in the woven state, for example, the network type, and the composition for preparing the inorganic layer is immersed into pores of the network type to prepare an organic-inorganic composite which is integrated with the negative electrode active material layer.

Furthermore, in case of firstly preparing the inorganic layer, the composition for preparing the inorganic layer may be immersed in pores which may be naturally formed to integrate therewith, and the composition for preparing the organic layer then undergoes electrospinning to slightly immerse it the inorganic layer, thereby integrating the organic-inorganic layer and the negative electrode active material layer.

Such integration may be effectively obtained by further performing roll-pressing.

Thereafter, the negative electrode may be positioned to be contacted with the positive electrode to prepare an electrode assembly. Herein, the positive electrode may be positioned to be contacted with the organic-inorganic composite layer.

The positive electrode may include a current collector and a positive electrode active material layer formed on the current collector.

The positive electrode active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. $Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.5$, $0 < \alpha < 2$); $Li_aNi_{1-b-c}Mn_bX_cD_\alpha$ ($0.90 \le a \le 1.8$, $0 \le b \le 0.5$, $0 \le c \le 0.5$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.5$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0 \le e \le 0.1$); $Li_aNi_bCo_cAl_dG_eO_2$ ($0.90 \le a \le 1.8$, $0 \le b \le 0.9$, $0 \le c \le 0.5$, $0 \le d \le 0.5$, $0 \le e \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-?b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$ $Li_{(3??f)}J_2$ $PO_{43}$ ($0 \le f \le 2$); $Li_{(3-f)}Fe_2$ $PO_{43}$ ($0 \le f \le 2$); $Li_aFePO_4$ ($0.90 \le a \le 1.8$)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in any method having no adverse influence on properties of a positive electrode active material by using these elements in the compound (for example, the method may include any coating method such as spray coating, dipping, and the like), but is not illustrated in more detail since it is well-known in the related field.

In the positive electrode, an amount of the positive electrode active material may be 90 wt% to 98 wt% based

on the total weight of the positive electrode active material layer.

In an embodiment, the positive electrode active material layer may further include a binder and a conductive material. Herein, the binder and the conductive material may be included in an amount of 1 wt% to 5 wt%, respectively, based on the total amount of the positive electrode active material layer.

The binder improves binding properties of positive electrode active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use Al, but is not limited thereto.

A lithium secondary battery according to one embodiment may include the electrode assembly and an electrolyte.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone and the like. Furthermore, the alcohol-based solvent may include ethyl alcohol, isopropyl alcohol, and the like, and examples of the aprotic solvent include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture, when the organic solvent is used in a mixture, the mixture ratio may be controlled in accordance with a desirable battery performance.

Furthermore, the carbonate-based solvent may include a mixture with a cyclic carbonate and a linear carbonate. Herein, when the mixture of cyclic carbonate and linear carbonate mixed together in a volume ratio of about 1:1 to about 1:9 is used as an electrolyte, it may have enhanced performance.

The organic solvent may further include an aromatic hydrocarbon-based solvent as well as the carbonate-based solvent. Herein, the carbonate-based solvent and aromatic hydrocarbon-based solvent may be mixed together in a volume ratio of 1:1 to 30:1.

The aromatic hydrocarbon-based organic solvent may be an aromatic hydrocarbon-based compound represented by Chemical Formula 1.

[Chemical Formula 1]

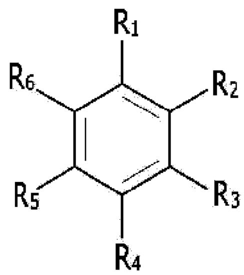

(In Chemical Formula 1, $R_1$ to $R_6$ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene,2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, an ethylene carbonate-based compound represented by Chemical Formula 2, or propane sultone, as an additive for improving cycle life.

[Chemical Formula 2]

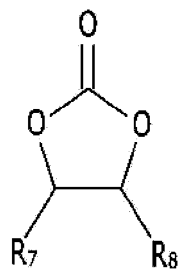

(In Chemical Formula 2, $R_7$ and $R_8$ are the same or different and may each independently be hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.)

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. In case of further using the additive for improving cycle life, an amount of the additive may be suitably controlled within an appropriate range.

The lithium salt dissolved in an organic solvent supplies a battery with lithium ions, basically operates the lithium secondary battery, and improves transportation of the lithium ions between positive and negative electrodes. Examples of the lithium salt may include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$, where x and y are a natural numbers, for example integers of 1 to 20, LiCl, LiI and $LiB(C_2O_4)_2$ (lithium bis(oxalato) borate: LiBOB). A concentration of the lithium salt may range from 0.1 M to 2.0 M. When the lithium salt is included at the above concentration range, an electrolyte may have excellent performance and lithium ion mobility due to optimal electrolyte conductivity and viscosity.

The lithium secondary battery may further include a separator between the negative electrode and the positive electrode, depending on a kind of the battery. Examples of a suitable separator material may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 2 is an exploded perspective view of a lithium secondary battery according to one embodiment. The lithium secondary battery according to an embodiment is illustrated as a prismatic battery but is not limited thereto and may include variously-shaped batteries such as a cylindrical battery, a pouch battery, and the like.

Referring to FIG. 2, a lithium secondary battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

**MODE FOR PERFORMING THE INVENTION**

Hereinafter, examples of the present invention and comparative examples are described. These examples are not in any sense to be interpreted as limiting the scope of the invention.

(Example 1)

97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated on a copper current collector and dried followed by pressing to prepare a negative electrode active material layer.

A composition for an organic layer including polyamide imide as a high heat resistant engineering resin and a dimethyl acetate solvent was electrospun on the negative electrode active material to form an organic layer. In the composition for an organic layer, an amount of polyamide imide was 10 wt% based on the total of 100 wt% of the composition for the organic layer.

The electrospinning was performed by the following method.

A collector roller and one nozzle pack including 52 tips in which a hole size was 25 G were positioned at a gap of 15 cm, the composition for the organic layer was added to the tip, a voltage of 40 kV to 50 kV was applied, and electrospinning was performed under a condition of 26 °C and relative humidity of 50 %. Herein, the speed of a roll of the collector roll was set to be 1 m/min to 3 m/min, and the solid amount in the composition for the organic layer emitted from tip was set to be 150 $\mu\ell$/min. Furthermore, while a compressed air was flowed under a 0.1 MPa pressure, the process was performed.

After completing the electrospinning, drying was performed using hot air of 90 °C.

According to the electrospinning, an organic layer with a thickness of 8 μm was formed. Thereafter, electrospraying was performed using a composition for an inorganic layer including alumina, a polyvinylidene fluoride binder, and a mixed solvent of dimethyl acetate and acetone (1:1 volume ratio) to prepare an inorganic layer. In the composition for an inorganic layer, an amount of alumina was 90 wt% based on the total of 100 wt% of the composition for the inorganic layer.

The electrospraying was performed according to the following method.

A collector roller and one nozzle pack including 52 tips in which a hole size was 25 G were positioned at a gap of 15 cm, the composition for the inorganic layer was added to the tip, a voltage of 40 kV to 50 kV was applied, and electrospinning was performed under a condition of 26 °C and relative humidity of 50 %. Herein, the speed of a roll of the collector roll was set to be 1 m/min to 3 m/min, and the solid amount in the composition for the inorganic layer emitted from the tip was set to be 10 $\mu\ell$/min. Furthermore, while compressed air was flowed under a 0.1 MPa pressure, the process was performed.

After completing the electrospinning, drying was performed using hot air of 90 °C.

According to the electrospraying, an inorganic layer with a thickness of 12 μm was formed.

According to the process, a negative electrode in which the organic-inorganic composite layer of the organic layer and the inorganic layer was integrated with the negative electrode active material layer was prepared.

96 wt% of $LiCoO_2$, 2 wt% of ketjen black, and 2 wt% of polyvinylidene fluoride were mixed in an N-methyl pyrrolidone solvent to prepare a positive electrode active material slurry. The positive electrode active material slurry was coated on an Al current collector, dried, and compressed to prepare a positive electrode.

The negative electrode and the positive electrode were stacked in contact with each other to fabricate an electrode assembly. Herein, the organic-inorganic composite layer of the negative electrode was positioned to be contacted with the positive electrode. A lithium secondary cell was fabricated by using the electrode assembly and electrolyte. The electrolyte was prepared by using a mixed solvent of ethylene carbonate and ethyl methyl carbonate (a volume ratio of 50:50) and dissolving 1 M $LiPF_6$ therein.

(Example 2)

A lithium secondary cell was fabricated by the same procedure as in Example 1, except that a roll-press was further performed at 110 °C after forming the inorganic layer to compress the organic-inorganic composite layer.

(Example 3)

97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated on a copper current collector and dried followed by pressurizing it to prepare a negative electrode active material layer.

The composition for an inorganic layer prepared in Example 1 was electrosprayed to the negative electrode active material layer by the same procedure as in Example 1 to prepare an inorganic layer of a thickness of 12 μm. Thereafter, the composition for an organic layer prepared in Example 1 was electrospun by the same procedure as in Example 1 to prepare an organic layer of a thickness of 8 μm.

According to the process, a negative electrode in which the inorganic-organic composite layer of the organic layer and the inorganic layer was integrated with the negative electrode active material layer was prepared.

96 wt% of $LiCoO_2$, 2 wt% of ketjen black, and 2 wt% of polyvinylidene fluoride were mixed in an N-methyl pyrrolidone solvent to prepare a positive electrode active material slurry. The positive electrode active material slurry was coated on an Al current collector, dried, and compressed to prepare a positive electrode.

The negative electrode and the positive electrode were stacked in contact with each other to fabricate an electrode assembly. Herein, the organic-inorganic composite layer of the negative electrode was positioned to contact the positive electrode. A lithium secondary cell was fabricated by using the electrode assembly and electrolyte. The electrolyte was prepared by using a mixed solvent of ethylene carbonate and ethyl methyl carbonate (a volume ratio of 50:50) and dissolving 1 M $LiPF_6$ therein.

(Example 4)

A lithium secondary cell was fabricated by the same procedure as in Example 3, except that a roll-press was further performed at 110 °C after forming the organic layer to compress the organic-inorganic composite layer.

(Comparative Example 1)

97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated on a copper current collector and dried followed by pressing to prepare a negative electrode active material layer.

96 wt% of $LiCoO_2$, 2 wt% of ketjen black, and 2 wt% of polyvinylidene fluoride were mixed in an N-methyl pyrrolidone solvent to prepare a positive electrode active material slurry. The positive electrode active material slurry was coated on an Al current collector, dried followed by pressuring.

The negative electrode, a polyethylene separator (thickness: 16 μm), and the positive electrode were stacked and compressed at 90 °C and a load of 270 kg for 10 seconds to fabricate an electrode assembly. A lithium secondary cell was fabricated by using the electrode assembly and electrolyte. The electrolyte was prepared by using a mixed solvent of ethylene carbonate and ethyl methyl carbonate (a volume ratio of 50:50) and dissolving 1 M $LiPF_6$ therein.

(Comparative Example 2)

A lithium secondary battery was fabricated by the same procedure as in Example 2, except that the negative electrode of Example 2, a polyethylene separator (thickness: 16 μm) and the positive electrode were stacked and compressed at 90 °C at a load of 270 kg for 10 seconds to fabricate an electrode assembly.

(Comparative Example 3)

97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated on a copper current collector and dried followed by pressing to prepare a negative electrode active material layer.

The composition for an inorganic layer used in Example 1 was electrosprayed to the negative electrode active material layer by the same procedure as in Example 1 to prepare an inorganic layer of a thickness of 12 μm to prepare a negative electrode in which the negative electrode active material layer was integrated with the inorganic layer.

96 wt% of $LiCoO_2$, 2 wt% of ketjen black, and 2 wt% of polyvinylidene fluoride were mixed in an N-methyl pyrrolidone solvent to prepare a positive electrode active material slurry. The positive electrode active material slurry was coated on an Al current collector, dried, and compressed to prepare a positive electrode.

The negative electrode and the positive electrode were stacked in contact with each other to fabricate an electrode assembly. Herein, the inorganic layer of the negative electrode was positioned to contact the positive electrode. A lithium secondary cell was fabricated by using the electrode assembly and an electrolyte. The electrolyte was prepared by using a mixed solvent of ethylene carbonate and ethyl methyl carbonate (a volume ratio of 50:50) and dissolving 1 M $LiPF_6$ therein.

(Comparative Example 4)

97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active

material slurry was coated on a copper current collector and dried followed by pressurizing it to prepare a negative electrode active material layer.

The composition for an inorganic layer used in Example 1 was electrospun to the negative electrode active material layer by the same procedure as in Example 1 to prepare an organic layer of a thickness of 12 μm to prepare a negative electrode in which the negative electrode active material layer was integrated with the organic layer.

96 wt% of $LiCoO_2$, 2 wt% of ketjen black, and 2 wt% of polyvinylidene fluoride were mixed in an N-methyl pyrrolidone solvent to prepare a positive electrode active material slurry. The positive electrode active material slurry was coated on an Al current collector, dried, and compressed to prepare a positive electrode.

The negative electrode and the positive electrode were stacked in contact with each other to fabricate an electrode assembly. Herein, the organic layer of the negative electrode was positioned to be contacted with the positive electrode.

The electrolyte was prepared by using a mixed solvent of ethylene carbonate and ethyl methyl carbonate (a volume ratio of 50:50) and dissolving 1 M $LiPF_6$ therein.

(Comparative Example 5)

97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated on a copper current collector and dried followed by pressing to prepare a negative electrode active material layer.

The composition for an organic layer prepared in Example 1 was electrosprayed to the negative electrode active material layer by the same procedure as in Example 1 to prepare a first organic layer of a thickness of 8 μm. Thereafter, a composition for a second organic layer including polyacrylonitrile, polyvinylidene fluoride, and a dimethyl acetate solvent was electrospun to the first organic layer by the same procedure as in Example 1 to prepare a second organic layer of a thickness of 8 μm. In the composition for the second organic layer, an amount of polyacrylonitrile was 6 wt% based on the total weight of the composition for the second organic layer, and the amount of the polyvinylidene fluoride binder was 6 wt% based on the total weight of the composition for the second organic layer.

According to the process, a negative electrode in which the first and the second organic layers were integrated with the negative electrode active material layer, was prepared.

(Comparative Example 6)

97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated on a copper current collector and dried followed by pressurizing it to prepare a negative electrode active material layer.

A cellulose nanofiber-included suspension liquid including 0.5 wt% of cellulose nanofiber, 0/005 wt% of a vinyl alcohol-vinyl acetate copolymer (POVAL) binder, 1 wt% of triethylene glycol butyl methyl ether, and a water solvent was coated on the negative electrode active material layer using a film applicator to prepare a cellulose nanofiber layer having a thickness of 10 μm. Thereafter, a composition for an inorganic layer including alumina, a polyvinylidene fluoride binder, and a mixed solvent of dimethyl acetate and acetone (1:1 volume ratio) was coated using a film applicator to prepare an inorganic layer with a thickness of 10 μm. In the composition for an inorganic layer, an amount of alumina was 90 wt% based on the total of 100 wt% of the composition for the inorganic layer.

According to the process, a negative electrode in which the cellulose nanofiber layer was integrated with the inorganic layer was prepared.

96 wt% of $LiCoO_2$, 2 wt% of ketjen black, and 2 wt% of polyvinylidene fluoride were mixed in an N-methyl pyrrolidone solvent to prepare a positive electrode active material slurry. The positive electrode active material slurry was coated on an Al current collector, dried, and compressed to prepare a positive electrode.

The negative electrode and the positive electrode were stacked in contact with each other to fabricate an electrode assembly. Herein, the organic-inorganic composite layer of the negative electrode was positioned to be contacted with the positive electrode. A lithium secondary cell was fabricated by using the electrode assembly and electrolyte. The electrolyte was prepared by using a mixed solvent of ethylene carbonate and ethyl methyl carbonate (a volume ratio of 50:50) and dissolving 1 M $LiPF_6$ therein.

Experimental Example 1: Measurement of SEM

A cross-section SEM photograph for the negative electrode prepared by Example 1 was taken, and the result is shown in FIG. 3. As shown in FIG. 3, the negative electrode according to Example 1 included an organic-inorganic

layer of a part in which the organic material was the inorganic material (boxed area) and the interface (boundary plane) of the organic-inorganic layer and the negative electrode active material layer was not clearly shown to exhibit unevenness.

Experimental Example 2: Evaluation of capacity and charge and discharge efficiency

The lithium secondary cells of Examples 1 to 4 and Comparative Examples 1 to 5 were performed by a formation process in which constant current charged at a 1.0 C current and a 4.4 V, cut-off voltage at 25°C and constant voltage charged to reach current to 0.025 C while 4.4 V was maintained, and then, constant current discharged at 0.1 C until the voltage reached 2.75 V. Herein, the charge and discharge efficiency was obtained, and the results are shown in Table 1.

The cells performed by the formation process underwent the standard process in which constant current charging was performed at a 0.2 C current, until the voltage reached 4.4 V, constant voltage charging was performed to reach a current to 0.025 C while 4.4 V was maintained, and constant current discharging was performed at a 0.2 C constant current until the voltage reached 2.75 V during discharging. Herein, the discharge capacity was measured, and the results are shown in Table1.

Experimental Example 3: Evaluation of high-rate characteristic

The lithium secondary cells according to Examples 1 to 4 and Comparative Examples 1 to 5 were constant-current charged at 0.2 C to 4.4 V and constant-voltage charged until the current reached 0.025 C, while 4.4 V was maintained. The cells constant-voltage charged were constant-current discharged at 0.2 C, 0.5 C, 1.0 C, and 2.0 C until the voltage reached 2.75 V, and the ratio of discharge capacity at 2.0 C to discharge capacity at 0.2 C discharge was calculated, and then the results are shown in Table 2, as discharge rate capability.

[Equation 1]

Discharge rate-capability (%) = (discharge capacity at 2.0 C/ discharge capacity at 0.2 C) ㄴㅅ 100

Experimental Example 4: Evaluation of cycle-life characteristic

The lithium secondary cells of Examples 1 to 4 and Comparative Examples 1 to 6 in which the formation and the standard process were performed, constant current charged at a 1C current at 25 °C until the voltage reached 4.4 V and constant current charged while 4.4 V was maintained, until the current reached 0.025 C. Thereafter, the cycles for discharging at a constant current of 1 C until the voltage reached to 2.75 V at discharging, were repeated for 300 cycles. A ratio of discharge capacity at the $300^{th}$ cycle to discharge capacity at the $1^{st}$ cycle was calculated by Equation 2, and the results are shown in Table 1, as capacity retention.

[Equation 2]

Capacity retention (%)= (discharge capacity at $300^{th}$ cycle/ discharge capacity at $1^{st}$ cycle] ㄴㅅ100

(Table 1)

| | Discharge capacity (mAh/g) | Charge and discharge efficiency (%) | Discharge rate-capability (%, 2.0 C/0.2 C) | Capacity retention (%) |
|---|---|---|---|---|
| Example 1 | 187.8 | 86.9 | 90.4 | 88 |

(continued)

<table>
<tr><th></th><th>Discharge capacity (mAh/g)</th><th>Charge and discharge efficiency (%)</th><th>Discharge rate-capability (%, 2.0 C/0.2 C)</th><th colspan="2">Capacity retention (%)</th></tr>
<tr><td>Example 2</td><td>187.9</td><td>86.6</td><td>90.6</td><td colspan="2">93</td></tr>
<tr><td>Example 3</td><td>187.6</td><td>86.8</td><td>90.5</td><td colspan="2">87</td></tr>
<tr><td>Example 4</td><td>187.6</td><td>86.9</td><td>90.6</td><td colspan="2">91</td></tr>
<tr><td>Comparative Example 1</td><td>187.6</td><td>86.6</td><td>85.2</td><td colspan="2">72</td></tr>
<tr><td>Comparative Example 2</td><td>187.5</td><td>86.7</td><td>85.0</td><td colspan="2">73</td></tr>
<tr><td>Comparative Example 3</td><td>187.1</td><td>85.0</td><td>89.7</td><td colspan="2">80</td></tr>
<tr><td>Comparative Example 4</td><td colspan="5">Lithium dendrites caused a short circuit to occur, so it is impossible to work as a cell</td></tr>
<tr><td>Comparative Example 5</td><td colspan="5">Lithium dendrites caused a short circuit to occur, so it is impossible to work as a cell</td></tr>
<tr><td>Comparative Example 6</td><td>187.0</td><td colspan="2">84.0</td><td>83.5</td><td>64</td></tr>
</table>

As shown in Table 1, Examples 1 to 4 in which the organic-inorganic composite layer was included, the organic-inorganic layer was integrated with the negative electrode active material layer, and the additional separator was not included, exhibited suitable discharge capacity, and charge and discharge efficiency, and better high rate-capability and capacity retention.

Whereas Comparative Example 1 using the general separator exhibited suitable discharge capacity and charge and discharge efficiency, but had deteriorated discharge rate-capability, and particularly, extremely deteriorated cycle-life characteristics.

In addition, in Comparative Example 2 using the additional separator to Example 2, discharge rate-capability and capacity retention were even deteriorated and thus, it is shown from these results that an additional separator is not desired.

Furthermore, Comparative Example 3 including only an inorganic layer exhibited suitable discharge capacity, and charge and discharge efficiency, but slightly low discharge rate-capability and extremely deteriorated capacity retention.

In addition, Comparative Example 4 including only an organic layer and Comparative Example 5 including two organic layers, caused short circuit due to generated lithium dendrites, and thus it cannot work as a battery and the results cannot be obtained.

Comparative Example 6 including the organic layer with aqueous methyl cellulose, exhibited slightly deteriorated charge and discharge efficiency, and discharge rate-capability, and significantly deteriorated capacity retention.

Experimental Example 5: Evaluation of flexibility

The flexibility for the negative electrodes of Example 2 and Comparative Examples 1 and 2 was measured using a 3-point bending device (UTM, universal testing machine).

The flexibility was tested for the specimens obtained by performing the following dry compression and wet compression to prepare an electrode assembly and preparing an electrode assembly into a rectangular shape of MD (width) of 20 mm X TD (length) of 5 mm.

1) Dry compression

The positive electrodes and the negative electrodes of Example 2 and Comparative Examples 1 and 2 were stacked in order to contact each other, and compressed at a load of 270 kg at 90 °C for 10 seconds.

2) Wet compression

The positive electrodes and the negative electrodes of Example 2 and Comparative Examples 1 and 2 were stacked in order to contact each other, an electrolyte was injected thereto, and compressing was performed at a load of 270 kg at 90 °C for 10 seconds. The electrolyte was prepared by using a mixed solvent of ethylene carbonate and ethyl methyl carbonate (a volume ratio of 50:50) and dissolving 1 M $LiPF_6$ therein.
The load cell (100 N) was lowered to the prepared specimen at a speed of 5 mm/min in a direction of compression, and the measurements were started when the load cell was touched to the specimen and then measurements were completed when the measurement displacement reached 7 mm. @@@측정 변위가 Herein, the load value according to measured displacement of a load cell was measured, and the results are shown in Table 2.

(Table 2)

| | Electrode flexibility (N) | |
|---|---|---|
| | Wet compression | Dry compression |
| Example 2 | 0.2 | 0.2 |
| Comparative Example 1 | 1.3 | 2.2 |
| Comparative Example 2 | 1.5 | 2.6 |

As shown in Table 2, the maximum load value of Example 2 was very much lower than Comparative Examples 1 and 2, to show excellent flexibility.
While this disclosure has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

**1.** An electrode assembly for a lithium secondary battery, consisting of:

a negative electrode comprising a current collector; a negative electrode active material layer positioned on the current collector; and an organic-inorganic composite layer integrated with the negative electrode active material layer; and
a positive electrode,
wherein the organic-inorganic composite layer comprises an organic layer and an inorganic layer.

**2.** The electrode assembly for a lithium secondary battery of claim 1, wherein the organic layer is positioned to contact the negative electrode active material layer.

**3.** The electrode assembly for a lithium secondary battery of claim 1, wherein the inorganic layer is positioned to contact the negative electrode active material layer.

**4.** The electrode assembly for a lithium secondary battery of claim 1, wherein the organic layer comprises polyethylene, polypropylene, polyester, polyamide, polyimide, polyamideimide, polyetherimide, polyacrylonitrile, polyvinylidene fluoride, polyvinylchloride, polyvinylidene chloride, polyethyleneglycol derivative, polyoxide, polyvinylacetate, polystyrene, polyvinylpyrrolidone, a copolymer thereof, or a combination thereof.

**5.** The electrode assembly for a lithium secondary battery of claim 1, wherein the inorganic layer comprises an inorganic material selected from alumina ($Al_2O_3$), boehmite (aluminum oxide hydroxide), zirconia, titanium oxide ($TiO_2$), silica ($SiO_2$), or a combination thereof.

**6.** The electrode assembly for a lithium secondary battery of claim 1, wherein the organic layer is a woven-type.

**7.** The electrode assembly for a lithium secondary battery of claim 1, wherein the inorganic layer is a dense layer.

8. The electrode assembly for a lithium secondary battery of claim 1, wherein the negative electrode active material layer comprises a crystalline carbon negative electrode active material.

9. The electrode assembly for a lithium secondary battery of claim 1, wherein the organic layer has a thickness of 1 μm to 20 μm.

10. The electrode assembly for a lithium secondary battery of claim 1, wherein the inorganic layer has a thickness of 1 μm to 25 μm.

11. A lithium secondary battery, comprising:

    an electrode assembly of any one of claim 1 to claim 10; and
    an electrolyte.

FIG. 1

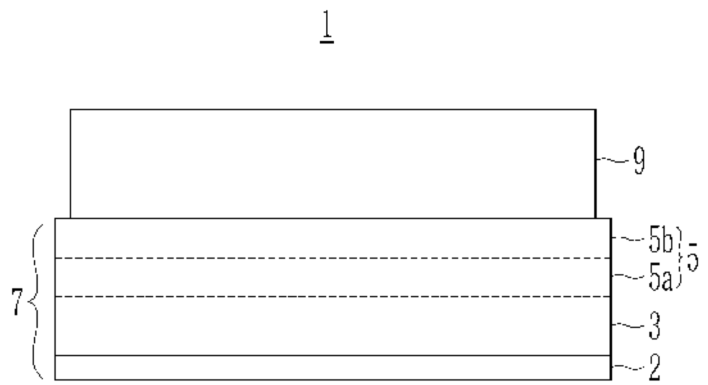

FIG. 2

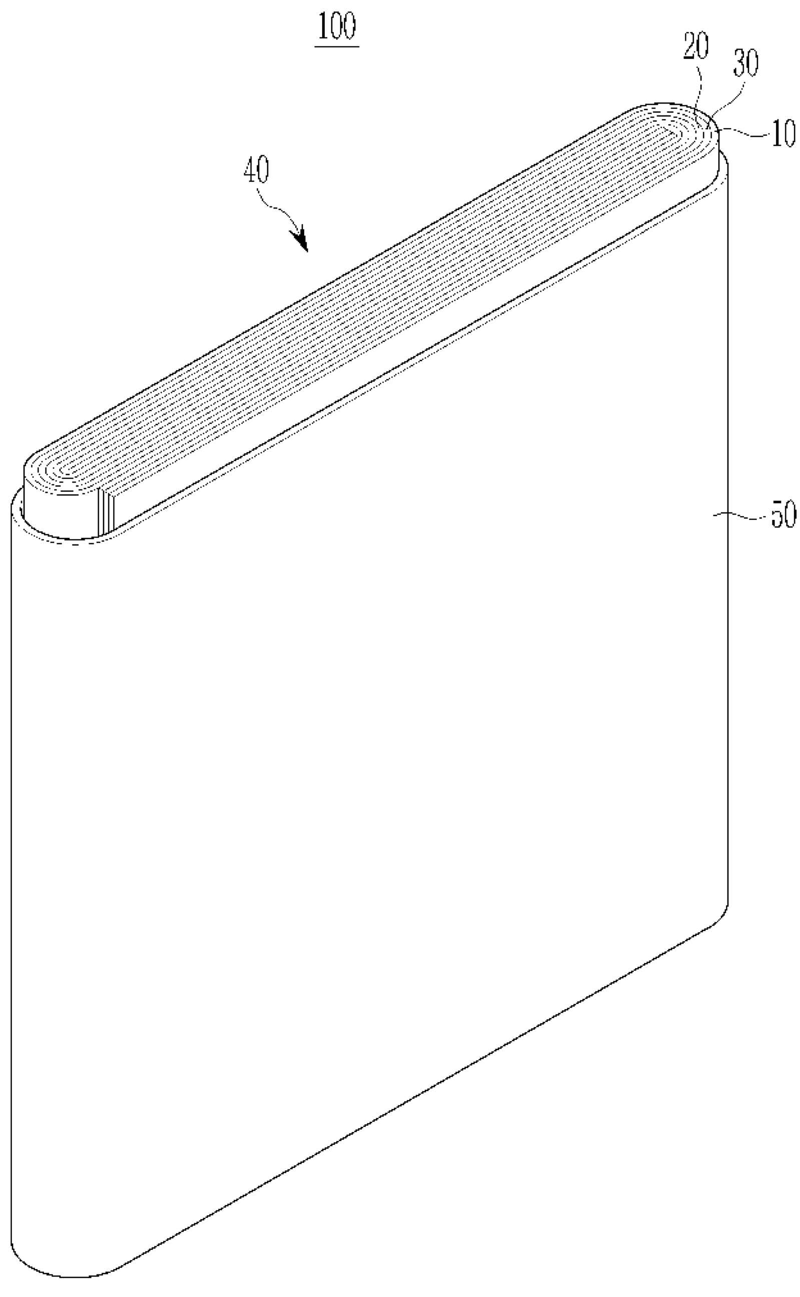

FIG. 3

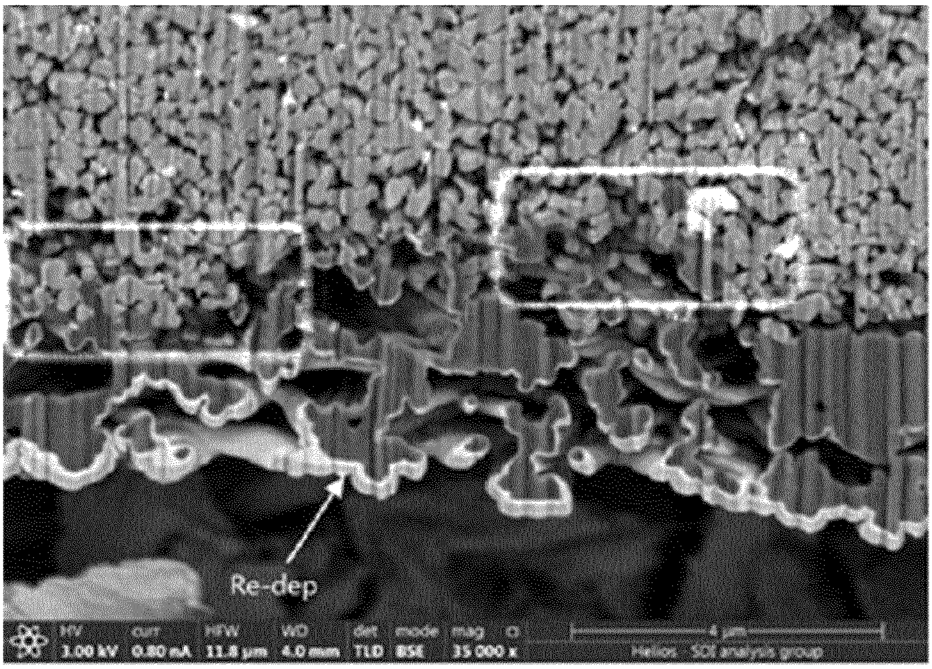
Re-dep
HV 3.00 kV
curr 0.80 nA
HFW 11.8 μm
WD 4.0 mm
det TLD
mode BSE
mag 35 000 x
4 μm
Helios SDI analysis group

**INTERNATIONAL SEARCH REPORT**

International application No.
**PCT/KR2021/011477**

**A. CLASSIFICATION OF SUBJECT MATTER**

**H01M 4/13**(2010.01)i; **H01M 4/133**(2010.01)i; **H01M 50/46**(2021.01)i; **H01M 50/446**(2021.01)i; **H01M 10/058**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/04(2006.01); H01M 10/0525(2010.01); H01M 2/16(2006.01); H01M 4/80(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 유기-무기 복합층(organic-inorganic complex layer), 전기 방사(electrospinning), 전기 분사(electrospary)

**C. DOCUMENTS CONSIDERED TO BE RELEVANT**

| Category* | Citation of document, with indication, where appropriate, of the relevant passages | Relevant to claim No. |
|---|---|---|
| X | KR 10-2008-0010166 A (LG CHEM, LTD.) 30 January 2008 (2008-01-30)<br>See claims 1-10, 15 and 17; paragraphs [0037] and [0073]; and example 1. | 1-11 |
| X | KR 10-1750327 B1 (LG CHEM, LTD.) 23 June 2017 (2017-06-23)<br>See claim 1; and paragraphs [0022], [0024], [0029], [0031], [0033], [0034], [0039], [0040] and [0042]. | 1-11 |
| X | KR 10-2017239 B1 (LG CHEM, LTD.) 02 September 2019 (2019-09-02)<br>See claims 1, 4, 8, 10 and 11; and paragraphs [0047], [0049], [0058], [0061], [0063], [0066], [0117] and [0121]. | 1-11 |
| A | EP 2978047 A1 (SONY CORPORATION) 27 January 2016 (2016-01-27)<br>See entire document. | 1-11 |
| A | US 2013-0236766 A1 (AMOGREENTECH CO., LTD.) 12 September 2013 (2013-09-12)<br>See entire document. | 1-11 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2021** | **06 December 2021** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/011477**

| Patent document cited in search report | Publication date (day/month/year) | Patent family member(s) | Publication date (day/month/year) |
|---|---|---|---|
| KR 10-2008-0010166 A | 30 January 2008 | KR 10-0918751 B1 | 24 September 2009 |
| KR 10-1750327 B1 | 23 June 2017 | KR 10-2016-0033988 A | 29 March 2016 |
| KR 10-2017239 B1 | 02 September 2019 | KR 10-2016-0130716 A | 14 November 2016 |
| EP 2978047 A1 | 27 January 2016 | CA 2905653 A1 | 25 September 2014 |
| | | CA 2905653 C | 23 June 2020 |
| | | CN 105051941 A | 11 November 2015 |
| | | CN 105051941 B | 21 November 2017 |
| | | EP 2978047 B1 | 22 November 2017 |
| | | EP 3306708 A1 | 11 April 2018 |
| | | EP 3306708 B1 | 03 July 2019 |
| | | EP 3573137 A1 | 27 November 2019 |
| | | EP 3573137 B1 | 23 December 2020 |
| | | JP 6582979 B2 | 02 October 2019 |
| | | KR 10-2015-0131005 A | 24 November 2015 |
| | | KR 10-2130867 B1 | 08 July 2020 |
| | | US 10079379 B2 | 18 September 2018 |
| | | US 2016-0043370 A1 | 11 February 2016 |
| | | WO 2014-148036 A1 | 25 September 2014 |
| US 2013-0236766 A1 | 12 September 2013 | KR 10-1246825 B1 | 28 March 2013 |
| | | KR 10-1246827 B1 | 28 March 2013 |
| | | KR 10-2012-0046091 A | 09 May 2012 |
| | | KR 10-2012-0046092 A | 09 May 2012 |
| | | WO 2012-060604 A2 | 10 May 2012 |
| | | WO 2012-060604 A3 | 07 September 2012 |

Form PCT/ISA/210 (patent family annex) (July 2019)